# FASCICULE DE BREVET EUROPEEN

(11) **EP 3 662 197 B1**
(45) Date de publication et mention de la délivrance du brevet: **04.10.2023**
(21) Numéro de dépôt: 18758972.6
(22) Date de dépôt: 03.08.2018
(51) Int. Cl.: F17C 13/12

(54) **SYSTÈME DE VIDANGE POUR LA VIDANGE D'UN RÉSERVOIR AVEC SYSTÈME DE PILOTAGE FLUIDIQUE D'UNE VANNE DE RACCORDEMENT DU RÉSERVOIR À UN ÉVENT**
ENTLEERUNGSSYSTEM ZUM ENTLEEREN EINES BEHÄLTERS MIT EINEM FLUIDSTEUERSYSTEM FÜR EIN VENTIL ZUM VERBINDEN DES BEHÄLTERS MIT EINER ENTLÜFTUNG
EMPTYING SYSTEM FOR EMPTYING A RESERVOIR WITH A FLUID CONTROL SYSTEM FOR A VALVE FOR CONNECTING THE RESERVOIR TO A VENT

(30) Priorité: 01.08.2017 FR 1757374
(43) Date de publication de la demande: 10.06.2020
(73) Titulaire: Areva Stockage d'Energie, 13547 Aix-en-Provence (FR)
(72) Inventeur: RAKOTONDRAINIBE, André, 13090 Aix-en-Provence (FR); VERBECKE, Franck, 13880 Velaux (FR); REYBAUD, Jean-Claude, 13821 La Penne/Huveaune (FR)
(74) Mandataire: Lavoix
(86) Numéro de dépôt international: PCT/IB2018/055871
(87) Numéro de publication internationale: WO 2019/026048

(56) Documents cités:
- WO-A1-2014/183841
- DE-A1-102011 119 668
- DE-A1-102014 205 712
- FR-A- 1 372 746
- FR-A1- 2 524 960
- US-A- 5 042 520

## Description

La présente invention concerne un système de stockage d'énergie selon le préambule de la revendication 1.

La généralisation des sources d'énergie électrique intermittentes que constituent les sources d'énergie renouvelable, telles que les centrales solaires ou les éoliennes, a rendu nécessaire le développement de solutions temporaires de stockage d'énergie permettant de lisser l'énergie électrique fournie par ces sources aux réseaux électriques. Une solution explorée est le stockage d'énergie sous forme chimique, dans laquelle au moins un fluide primaire est électrolysé de manière à produire des fluides secondaires, entre lesquels est ultérieurement produite une réaction d'oxydoréduction produisant une énergie électrique. Des exemples d'application de cette solution sont constitués notamment par les batteries à circulation et par les systèmes combinant électrolyseurs et piles à combustible.

Un problème rencontré avec ce type de solution est la sécurité du stockage des fluides secondaires entre leur production et leur utilisation. Il arrive en effet souvent que ces fluides secondaires soient des fluides dangereux, notamment parce qu'ils peuvent présenter un risque explosif, par exemple comme c'est le cas avec le dihydrogène.

Le stockage des fluides secondaires doit ainsi répondre à certaines règles de sécurité. Notamment, s'agissant du stockage de fluides secondaires présentant un risque explosif, le stockage doit permettre la vidange de ces derniers afin que ces fluides secondaires se retrouvent dispersés dans l'atmosphère et que le risque explosif disparaisse. Une telle vidange doit être rendue possible en cas d'incident survenu sur le site de stockage et doit pouvoir être faite tout en préservant la sécurité des personnes.

Des systèmes de vidange sont connus de FR2524960A1 et DE102011119668A1.

Des solutions de stockage de fluide existent permettant la vidange d'un réservoir stockant des produits explosifs par un opérateur agissant depuis un poste de commande situé hors d'une zone de danger autour du réservoir. Une telle solution est décrite dans WO 2014/183841, dans lequel les vannes de vidange d'un réservoir de stockage d'un fluide inflammable sont commandées à distance grâce à un système pneumatique.

Un inconvénient de la solution décrite dans ce document est qu'elle n'est pas fiable. En effet, une personne non-habilitée peut facilement enclencher le système de vidange, typiquement par acte malveillant, conduisant à la perte de l'énergie emmagasinée. En outre, le système ne peut être employé qu'un nombre de fois limité par la capacité des réservoirs alimentant le système pneumatique.

Un objectif de l'invention est ainsi d'éviter l'actionnement intempestif et malveillant du système de vidange d'un dispositif de stockage de fluide sous pression. Un autre objectif de l'invention est de permettre une utilisation illimitée du système de vidange.

A cet effet, l'invention a pour objet un système de stockage d'énergie selon la revendication 1.

Selon des modes de réalisation particuliers de l'invention, le système comprend une ou plusieurs des caractéristiques des revendications 2 à 6.

L'invention a également pour objet un procédé de vidange d'un système de stockage d'énergie, selon la revendication 7.

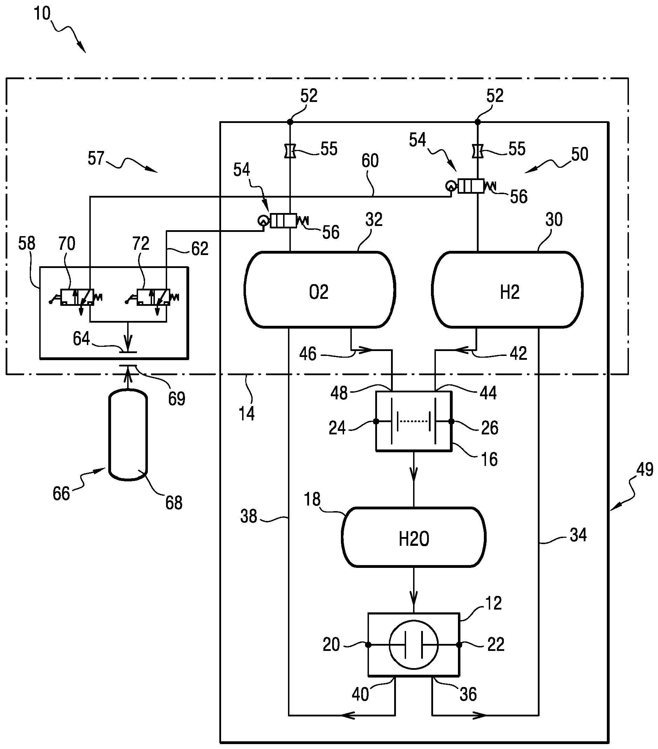

D'autres caractéristiques et avantages de l'invention apparaîtront à la lecture de la description qui va suivre, donnée uniquement à titre d'exemple non limitatif et faite en référence à la figure annexée, laquelle présente un schéma synoptique d'un système de stockage d'énergie selon l'invention.

Le système de stockage d'énergie 10 représenté sur cette figure comprend un électrolyseur 12 pour produire un premier fluide secondaire et un deuxième fluide secondaire par électrolyse d'un fluide primaire. Le système de stockage 10 comprend également un dispositif 14 de stockage des fluides secondaires pour stocker séparément les premier et deuxième fluides secondaires, et une pile à combustible 16 pour la génération d'énergie électrique et restauration du fluide primaire par réaction d'oxydoréduction entre les premier et deuxième fluides secondaires. De préférence, le système de stockage 10 comprend également, comme représenté, un dispositif 18 de stockage du fluide primaire.

Dans l'exemple représenté, le fluide primaire est de l'eau. Le premier fluide secondaire est alors du dihydrogène, et le deuxième fluide secondaire est du dihydrogène.

L'électrolyseur 12 présente des bornes électriques 20, 22 raccordées électriquement à une source d'énergie électrique (non représentée) constituée typiquement par une centrale solaire ou une éolienne. La pile à combustible 16 présente également des bornes électriques 24, 26 qui elles sont raccordées électriquement à une charge consommatrice d'énergie électrique, par exemple un réseau électrique.

Le dispositif de stockage des fluides secondaires 14 comprend, de manière connue, un premier réservoir 30 pour stocker le premier fluide secondaire et un deuxième réservoir 32 pour stocker le deuxième fluide secondaire. Le premier réservoir 30 est raccordé fluidiquement par une première conduite d'alimentation 34 à une première sortie fluidique 36 de l'électrolyseur 12, et le deuxième réservoir 32 est raccordé fluidiquement par une deuxième conduite d'alimentation 38 à une deuxième sortie fluidique 40 de l'électrolyseur 12. Le premier réservoir 30 est également raccordé fluidiquement par une première conduite de sortie 42 à une première entrée fluidique 44 de la pile à combustible 16, et le deuxième réservoir 32 est raccordé fluidiquement par une deuxième conduite de sortie 46 à une deuxième entrée fluidique 48 de la pile à combustible 16.

La première entrée fluidique 46 alimente fluidiquement un compartiment anodique (non représenté) de la pile à combustible 16, et la deuxième entrée fluidique 48 alimente fluidiquement un compartiment cathodique (non représenté) de la pile à combustible 16, lesdits compartiments cathodique et anodique étant séparés l'un de l'autre par des membranes échangeuses d'ions (non représentées).

Les réservoirs 30, 32 sont placés à l'intérieur d'une enceinte 49 typiquement constituée par un bâtiment.

Le dispositif de stockage des fluides secondaires 14 comprend également un système 50 de vidange des réservoirs 30, 32. Ce système de vidange 50 comprend, pour chacun des réservoirs 30, 32, un évent 52 pour l'évacuation du fluide contenu dans le réservoir 30, 32 hors dudit réservoir 30, 32 et en particulier hors de l'enceinte 49, une vanne d'évacuation 54 pour le raccordement fluidique du réservoir 30, 32 à l'évent 52, interposé fluidiquement entre le réservoir 30, 32 et l'évent 52, et, avantageusement, un diaphragme 55 interposé fluidiquement entre la vanne 54 et l'évent 52 pour maintenir la pression de fluide entre la diaphragme 55 et l'évent 52 à une pression sensiblement égale à la pression atomsphérique.

Chaque vanne d'évacuation 54 est déplaçable entre une configuration ouverte, dans laquelle la vanne d'évacuation 54 raccorde fluidiquement le réservoir 30, 32 à l'évent 52, et une configuration fermée, dans laquelle le réservoir 30, 32 et l'évent 52 sont isolés fluidiquement l'un de l'autre par la vanne d'évacuation 54.

Le système de vidange 50 comprend en outre, pour chaque vanne d'évacuation 54, un organe 56 de rappel de la vanne d'évacuation 54 vers sa configuration fermée. Cet organe de rappel 56 est typiquement constitué par un ressort.

Le système de vidange 50 comprend encore un système de pilotage fluidique 57 pour piloter le déplacement des vannes d'évacuation 54 vers leur configuration ouverte par action d'un fluide de manoeuvre sur chaque vanne d'évacuation 54. Ce système de pilotage 57 comprend un poste de manoeuvre commun 58, hors d'une zone de danger autour des réservoirs 30, 32, une première conduite fluidique de commande 60 raccordant fluidiquement le poste de manoeuvre 58 à la vanne d'évacuation 54 du premier réservoir 30, et une deuxième conduite fluidique de commande 62 raccordant fluidiquement le poste de manoeuvre 58 à la vanne d'évacuation 54 du deuxième réservoir 32.

Par « disposé hors de la zone de danger autour des réservoirs 30, 32 », on comprend que le poste de manoeuvre 58 est placé à une distance suffisante des réservoirs 30, 32 pour ne pas être atteint en cas d'explosion du fluide contenu dans l'un ou l'autre de ces réservoirs 30, 32. A cet effet, le poste de manoeuvre 58 est de préférence disposé hors de l'enceinte 49. En variante, en l'absence de paroi de séparation entre le poste de manoeuvre 58 et les réservoirs 30, 32, le poste de manoeuvre 58 est de préférence disposé à une distance de chaque réservoir 30, 32 de quelques dizaines de mètres.

Selon l'invention, le poste de manoeuvre 58 comprend un branchement libre réversible 64 pour le raccordement aux conduites fluidiques de commande 60, 62 d'un dispositif 66 d'alimentation du système de pilotage 57 en fluide de manoeuvre. Ce branchement libre réversible 64 est typiquement constitué par une connexion rapide et sécurisée des fluides gaz qui peut être alimentée soit par une cartouche de fluide pressurisé, soit par une source externe de fluide pressurisé.. Ainsi, l'actionnement du système de pilotage 57 est réservé aux seules personnes équipées d'un dispositif d'alimentation 66 compatible avec le branchement libre 64, c'est-à-dire adapté pour être branché fluidiquement au branchement libre 64, ce qui permet d'éviter des activations intempestives et malveillantes du système de vidange 50.

De préférence, le dispositif d'alimentation 66 est formé, comme représenté, par un réservoir 68 stockant le fluide de manoeuvre sous pression. Il est équipé d'une extrémité de raccordement 69 raccordée fluidiquement au réservoir 68 et compatible avec le branchement libre 64, c'est-à-dire adaptée pour coopérer avec le branchement libre 64 de manière à réaliser une liaison fluidique entre ladite extrémité 69 et le branchement libre 64.

Avantageusement, le système de pilotage fluidique 57 est constitué par un système de pilotage pneumatique. Le fluide de manoeuvre est alors constitué par un gaz sous pression, par exemple de l'air ou un gaz inerte tel que l'azote. Le dispositif d'alimentation 66 est ainsi beaucoup plus compact que dans le cas où le fluide de manoeuvre aurait été constitué par un liquide.

Le poste de manoeuvre 58 comprend également, pour chaque conduite de commande 60, 62, une vanne de commande 70, 72 interposée fluidiquement entre le branchement libre 64 et la conduite de commande 60, 62. Chaque vanne de commande 70, 72 est déplaçable entre une configuration ouverte, dans laquelle elle raccorde fluidiquement le branchement libre 64 à la conduite fluidique 60, 62 associée, et une configuration fermée, dans laquelle le branchement libre 64 et ladite conduite fluidique 60, 62 sont isolés fluidiquement l'une de l'autre par la vanne de commande 70, 72. Ainsi, il est possible pour l'opérateur de piloter la vitesse de vidange des réservoirs 30, 32. Il lui est également possible d'effectuer ce pilotage de manière indépendante sur chaque réservoir 30, 32.

De préférence, chaque vanne de commande 70, 72 est à commande musculaire, c'est-à-dire qu'elle est adaptée pour être opérée manuellement par un opérateur. De telles vannes sont connues et sont généralement désignées sous le vocable de « distributeurs à commande musculaire ».

Un procédé de fonctionnement du système de stockage d'énergie 10 va maintenant être décrit.

Lorsque l'énergie électrique produite par la source électrique est supérieure à celle demandée par le réseau, l'énergie électrique produite en excès est utilisée pour alimenter l'électrolyseur 12. Sous l'effet de cette énergie électrique, l'électrolyseur 12 hydrolyse de l'eau qui lui est fournie par le dispositif de stockage 18. L'eau est ainsi séparée en dihydrogène, qui est conduit par la conduite 34 jusque dans le premier réservoir 30, où il est stocké sous pression, et en dioxygène, qui est conduit par la conduite 38 jusque dans le deuxième réservoir 32, où il est lui aussi stocké sous pression. Les premier et deuxième réservoirs 30, 32 continuent ainsi de se remplir en dihydrogène et en dioxygène tant que l'énergie électrique produite par la source est supérieure à celle demandée par le réseau.

Lorsque l'énergie électrique produite par la source est inférieure à celle demandée par le réseau, la pile à combustible 16 est mise en fonctionnement pour fournir l'énergie électrique manquante. A cet effet, la pile est combustible 16 est alimentée via les conduites 42, 46 avec le dihydrogène et le dioxygène stockés dans les réservoirs 30, 32. Ce dioxygène et ce dihydrogène subissent dans la pile à combustible une réaction d'oxydoréduction produisant l'énergie électrique recherchée, mais également de l'eau. Cette eau est récoltée dans le dispositif de stockage 18 en prévision du moment où l'énergie électrique produite par la source électrique redeviendra supérieure à celle demandée par le réseau.

Lorsque survient un événement nécessitant la dépressurisation des réservoirs 30, 32, un opérateur se saisit d'un dispositif d'alimentation 66 compatible avec le branchement libre 64 et vient raccorder l'extrémité 69 de ce dispositif d'alimentation 66 au branchement libre 64. Il actionne ensuite les vannes de commande 70, 72 pour les basculer en configuration ouverte. Le fluide sous pression fourni par le dispositif d'alimentation 66 se propage alors dans chaque conduite de commande 60, 62 jusqu'à chaque vanne d'évacuation 54, sur laquelle il agit pour déplacer ladite vanne 54 en position ouverte. Le dihydrogène et le dioxygène contenus dans les réservoirs 30, 32 peuvent alors s'échapper par les évents 52, jusqu'à ce que les réservoirs 30, 32 soient vides. Tout danger d'explosion des réservoirs 30, 32 est alors écarté.

Grâce à l'invention décrite ci-dessus, il est possible de vidanger le dispositif de stockage des fluides secondaires 14 en toute sécurité. Le système 57 de pilotage des vannes 54 étant un système fluidique, cette vidange peut être effectuée sans apport d'énergie électrique, ce qui permet d'opérer même en cas de court-circuit et en l'absence de générateur de secours.

Un avantage supplémentaire de cette invention est qu'elle évite l'enclenchement intempestif du système de vidange 50 en réservant l'actionnement des vannes 54 aux seules personnes dotées de dispositifs d'alimentation 66 compatibles avec le branchement libre 64. Ces dispositifs d'alimentation 66 étant maintenus compacts grâce à l'emploi d'un système de pilotage pneumatique 57 pour piloter les vannes 54, la nécessité d'employer de tels dispositifs d'alimentation 66 ne gêne pas les capacités d'action des personnels qualifiés.

On notera que, bien que l'invention ait été décrite dans le cas où la conversion énergie électrique / énergie chimique est assurée par un couple électrolyseur - pile à combustible, l'invention n'est pas limitée à ce seul mode de réalisation. En variante (non représentée), la conversion énergie électrique / énergie chimique est assurée par une pile à combustible réversible, le dispositif de stockage d'énergie 10 constituant alors une batterie à circulation. Le fluide primaire est alors stocké dans le deuxième réservoir 32 avec le deuxième fluide secondaire, ce réservoir 32 n'étant pas équipé de vanne d'évacuation 54. Ce fluide primaire est typiquement constitué par de l'acide bromhydrique, le premier fluide secondaire étant alors du dihydrogène et le deuxième fluide secondaire étant du HBr₃ (complexe d'hydrobromure et de Brome). On notera également que l'invention ne se limite pas aux seuls systèmes de stockage d'énergie mais s'étend également aux systèmes de vidange de réservoirs utilisés dans d'autres applications, par exemple dans le cadre du stockage de produits chimiques destinés à alimenter des lignes de production et des unités de transformation industrielles.

## Revendications

1. Système de stockage d'énergie (10) comprenant un dispositif (12) de production d'un premier et d'un deuxième fluides secondaires par électrolyse d'au moins un fluide primaire, un dispositif (14) de stockage des fluides secondaires pour stocker séparément les premier et deuxième fluides secondaires, et une pile à combustible (16) pour la génération d'énergie électrique par réaction d'oxydoréduction entre les premier et deuxième fluides secondaires,
le dispositif de stockage des fluides secondaires (14) comprenant au moins deux réservoirs (30, 32) contenant un fluide sous pression, les réservoirs (30, 32) étant placés à l'intérieur d'une enceinte (49), le dispositif de stockage (14) comprenant également un système de vidange des réservoirs (30, 32),
le système de vidange (50) comprenant, pour chaque réservoir (30, 32) un évent (52) pour l'évacuation du fluide hors du réservoir (30, 32) et une vanne d'évacuation (54) pour le raccordement du réservoir (30, 32) à l'évent (52), ladite vanne d'évacuation (54) étant déplaçable entre une configuration ouverte, dans laquelle la vanne d'évacuation (54) raccorde fluidiquement le réservoir (30, 32) à l'évent (52), et une configuration fermée, dans laquelle le réservoir (30, 32) et l'évent (52) sont isolés fluidiquement l'un de l'autre par la vanne d'évacuation (54), le système de vidange (50) comprenant encore, pour chaque vanne d'évacuation (54), un organe (56) de rappel de la vanne d'évacuation (54) vers sa configuration fermée, et un système (57) de pilotage fluidique pour piloter le déplacement de chaque vanne d'évacuation (54) vers sa configuration ouverte par action d'un fluide de manoeuvre sur la vanne d'évacuation (54), ledit système de pilotage (57) comprenant un poste de manoeuvre (58) et, pour chaque vanne d'évacuation (54), une conduite fluidique (60, 62) raccordant fluidiquement le poste de manoeuvre (58) à la vanne d'évacuation (54), chaque vanne d'évacuation (54) du système de vidange (50) étant raccordée fluidiquement au réservoir (30, 32) respectif du dispositif de stockage de fluide (14) de manière à être interposée fluidiquement entre ledit réservoir (30, 32) et l'évent (52) du système de vidange (50),
le poste de manoeuvre (58) étant disposé en dehors de l'enceinte (49) et comprenant au moins un branchement libre réversible (64) pour le raccordement à chaque conduite fluidique (60, 62) d'un dispositif (66) d'alimentation du système de pilotage (57) en fluide de manoeuvre.

2. Système de stockage d'énergie (10) selon la revendication 1, dans lequel le système de pilotage fluidique (57) est constitué par un système de pilotage pneumatique, le fluide de manoeuvre étant constitué par un gaz sous pression.

3. Système de stockage d'énergie (10) selon la revendication 1 ou 2, dans lequel le poste de manoeuvre (58) comprend, pour la ou chaque conduite fluidique (60, 62), une vanne de commande (70, 72) interposée fluidiquement entre le branchement libre (64) et la conduite fluidique (60, 62), la vanne de commande (70, 72) étant déplaçable entre une configuration ouverte, dans laquelle la vanne de commande (70, 72) raccorde fluidiquement le branchement libre (64) à la conduite fluidique (60, 62), et une configuration fermée, dans laquelle le branchement libre (64) et la conduite fluidique (60, 62) sont isolés fluidiquement l'une de l'autre par la vanne de commande (70, 72).

4. Système de stockage d'énergie (10) selon la revendication 3, dans lequel la vanne de commande (70, 72) est à commande musculaire.

5. Système de stockage d'énergie (10) selon la revendication 4, dans lequel le fluide contenu dans un premier desdits réservoirs (30) est du dihydrogène et/ou le fluide contenu dans le deuxième réservoir (32) est du dioxygène.

6. Système de stockage d'énergie (10) selon la revendication 1, dans lequel le premier fluide secondaire est du dihydrogène.

7. Procédé de vidange d'un système de stockage d'énergie (10) selon l'une quelconque des revendications 1 à 6, **caractérisé en ce qu'**il comprend les étapes successives suivantes :
- raccordement au branchement libre réversible (64) d'un dispositif (66) d'alimentation en fluide de manoeuvre compatible avec le branchement libre réversible (64),
- établissement d'une liaison fluidique entre le dispositif d'alimentation (66) et au moins une conduite fluidique (60, 62), résultant en une augmentation de la pression du fluide de manoeuvre dans la conduite fluidique (60, 62),
- déplacement de la vanne d'évacuation (54) raccordée fluidiquement à ladite conduite fluidique (60, 62) vers sa position ouverte sous l'effet de la pression du fluide de manoeuvre dans la conduite fluidique (60, 62), et
- évacuation du fluide contenu dans le réservoir (30, 32) auquel est raccordée fluidiquement la vanne d'évacuation (54) via ladite vanne d'évacuation (54) et un évent (55) du système de vidange (50).

## Patentansprüche

1. Energiespeichersystem (10), umfassend eine Vorrichtung (12) zur Erzeugung eines ersten und eines zweiten Sekundärfluids durch Elektrolyse mindestens eines Primärfluids, eine Sekundärfluid-Speichervorrichtung (14) zur separaten Speicherung des ersten und des zweiten Sekundärfluids und eine Brennstoffzelle (16) zur Erzeugung von elektrischer Energie durch eine Redoxreaktion zwischen dem ersten und dem zweiten Sekundärfluid,
die Sekundärfluid-Speichervorrichtung (14) umfassend mindestens zwei Behälter (30, 32), die ein unter Druck stehendes Fluid enthalten, wobei die Behälter (30, 32) innerhalb eines Gehäuses (49) angeordnet sind, die Speichervorrichtung (14) auch umfassend ein System zum Leeren der Behälter (30, 32),
das Leerungssystem (50) umfassend, für jeden Behälter (30, 32), eine Entlüftung (52) zum Ablassen von Fluid aus dem Behälter (30, 32) und ein Ablassventil (54) zum Verbinden des Behälters (30, 32) mit der Entlüftung (52), wobei das Ablassventil (54) zwischen einer offenen Konfiguration, in der das Ablassventil (54) den Behälter (30, 32) mit der Entlüftung (52) fluidisch verbindet, und einer geschlossenen Konfiguration, in der der Behälter (30, 32) und die Entlüftung (52) durch das Ablassventil (54) fluidisch voneinander isoliert sind, verschiebbar ist, das Leerungssystem (50) ferner umfassend, für jedes Ablassventil (54), ein Element (56) zum Rückholen des Ablassventils (54) in seine geschlossene Konfiguration, und ein Fluidsteuerungssystem (57) zum Steuern der Bewegung von jedem Ablassventil (54) in seine offene Konfiguration durch Einwirkung eines Betätigungsfluids auf das Ablassventil (54), das Steuerungssystem (57) umfassend eine Betätigungsstation (58) und für jedes Ablassventil (54) eine Fluidleitung (60, 62), die die Betätigungsstation (58) fluidisch mit dem Ablassventil (54) verbindet, wobei jedes Ablassventil (54) des Leerungssystems (50) fluidisch mit dem jeweiligen Behälter (30, 32) der Fluidspeichervorrichtung (14) verbunden ist, sodass es fluidisch zwischen dem Behälter (30, 32) und der Entlüftung (52) des Leerungssystems (50) eingefügt ist,
wobei die Betätigungsstation (58) außerhalb der Einfassung (49) angeordnet ist und mindestens eine umkehrbare freie Abzweigung (64) für den Anschluss an jede Fluidleitung (60, 62) einer Vorrichtung (66) zur Versorgung des Steuerungssystems (57) mit Betätigungsfluid umfasst.

2. Energiespeichersystem (10) nach Anspruch 1, wobei das fluidische Steuerungssystem (57) aus einem pneumatischen Steuerungssystem besteht, wobei das Betätigungsfluid aus einem unter Druck stehenden Gas besteht.

3. Energiespeichersystem (10) nach Anspruch 1 oder 2, wobei die Betätigungsstation (58) für die oder jede Fluidleitung (60, 62) ein Steuerventil (70, 72) umfasst, das fluidisch zwischen der freien Abzweigung (64) und der Fluidleitung (60, 62) eingefügt ist, wobei das Steuerventil (70, 72) zwischen einer offenen Konfiguration, in der das Steuerventil (70, 72) die freie Abzweigung (64) fluidisch mit der Fluidleitung (60, 62) verbindet, und einer geschlossenen Konfiguration, in der die freie Abzweigung (64) und die Fluidleitung (60, 62) durch das Steuerventil (70, 72) fluidisch voneinander isoliert sind, verstellbar ist.

4. Energiespeichersystem (10) nach Anspruch 3, wobei das Steuerventil (70, 72) muskelbetätigt ist.

5. Energiespeichersystem (10) nach Anspruch 4, wobei das Fluid in einem ersten der Behälter (30) Dihydrogen ist und/oder das Fluid in dem zweiten Behälter (32) Dioxygen ist.

6. Energiespeichersystem (10) nach Anspruch 1, wobei das erste Sekundärfluid Dihydrogen ist.

7. Verfahren zum Leeren eines Energiespeichersystems (10) nach einem der Ansprüche 1 bis 6, **dadurch gekennzeichnet, dass** es die folgenden aufeinanderfolgenden Schritte umfasst:
- Anschließen an die umkehrbare freie Abzweigung (64) einer Vorrichtung (66) zum Zuführen von Betätigungsfluid, das mit der umkehrbaren freien Abzweigung (64) kompatibel ist,
- Herstellen einer Fluidverbindung zwischen der Zufuhrvorrichtung (66) und mindestens einer Fluidleitung (60, 62), was in einer Erhöhung des Drucks des Betätigungsfluids in der Fluidleitung (60, 62) resultiert,
- Bewegen des Ablassventils (54), das fluidisch mit der Fluidleitung (60, 62) verbunden ist, in seine offene Position unter dem Druck des Betätigungsfluids in der Fluidleitung (60, 62), und
- Ablassen des Fluids, das in dem Behälter (30, 32) enthalten ist, mit dem das Ablassventil (54) fluidisch verbunden ist, über das Ablassventil (54) und eine Entlüftung (55) des Ablasssystems (50).

## Claims

1. An energy storage system (10) comprising a device (12) for producing a first and a second secondary fluid by electrolysis of at least one primary fluid, and a storage device (14) for secondary fluids in order to store the first and second secondary fluids separately, and a fuel cell (16) for generating electrical energy by oxidation-reduction reaction between the first and second secondary fluids,
the storage device (14) for secondary fluids comprising at least two reservoir (30, 32) containing a pressurized fluid, the reservoirs (30, 32) being place inside an enclosure (49), the storage system (14) also comprising an emptying system for emptying said reservoirs (30, 32),
the emptying system (50) comprising, for each reservoir (30, 32), a vent (52) for discharging the fluid out of the reservoir (30, 32) and a discharge valve (54) for connecting the reservoir (30, 32) to the vent (52), the discharge valve (54) being movable between an open configuration, in which the discharge valve (54) fluidly connects the reservoir (30, 32) to the vent (52), and a closed configuration, in which the reservoir (30, 32) and the vent (52) are fluidly isolated from one another by the discharge valve (54), the emptying system (50) further comprising, for each discharge valve (54), a return member (56) for returning the discharge valve (54) to the closed configuration, and a fluid control system (57) for controlling the movement of each discharge valve (54) to the open configuration by action of an operating fluid on the discharge valve (54), said control system (57) comprising an operating station (58), and, for each discharge valve (54), a fluid pipe (60, 62) fluidly connecting the operating station (58) to the discharge valve (54), each discharge valve (54) of the emptying system (50) being fluidly connected to a respective reservoir (30, 32) of the fluid storage device (14) so as to be fluidly interposed between said reservoir (30, 32) and a vent (52) of the emptying system (50),
the operating station (58) being placed outside the enclosure (49) and comprising at least one reversible free connection (64) for connecting to each fluid pipe (60, 62) of a supply device (66) for supplying the control system (57) with the operating fluid.

2. Energy storage system (10) according to claim 1, wherein the fluid control system (57) is made up of a pneumatic control system, the operating fluid being formed by a pressurized gas.

3. Energy storage system (10) according to claim 1 or 2, wherein the operating station (58) comprises, for the or each fluid pipe (60, 62), a control valve (70, 72) fluidly inserted between the free connection (64) and the fluid pipe (60, 62), the control valve (70, 72) being movable between an open configuration, in which the control valve (70, 72) fluidly connects the free connection (64) to the fluid pipe (60, 62), and a closed configuration, in which the free connection (64) and the fluid pipe (60, 62) are fluidly isolated from one another by the control valve (70, 72).

4. Energy storage system (10) according to claim 3, wherein the control valve (70, 72) is manually controlled.

5. Energy storage system (10) according to claim 4, wherein the fluid contained in a first of said reservoirs (30) is dihydrogen and/or the fluid contained in the second reservoir (32) is dioxygen.

6. The energy storage system (10) according to claim 1, wherein the first secondary fluid is dihydrogen.

7. A method for emptying an energy storage system (10) according to any one of claims 1 to 6, **characterized in that** it comprises the following successive steps:
- connecting the reversible free connection (64) of an operating fluid supply device (66) compatible with the reversible free connection (64),
- establishing a fluid link between the supply device (66) and at least one fluid pipe (60, 62), resulting in an increase in the pressure of the operating fluid in the fluid pipe (60, 62),
- moving the discharge valve (54) fluidly connected to the fluid pipe (60, 62) toward the open position under the effect of the pressure of the operating fluid in the fluid pipe (60, 62), and
- discharging the fluid contained in the reservoir (30, 32) to which the discharge valve (54) is fluidly connected via said discharge valve (54) and a vent (55) of the emptying system (50).
